# EUROPEAN PATENT APPLICATION

(11) **EP 4 513 094 A1**
(43) Date of publication of application: **26.02.2025**
(21) Application number: 24167851.5
(22) Date of filing: 29.03.2024
(51) Int. Cl.: F24D 3/10, B32B 25/10

(54) **HYDRAULIC COMPONENT FOR CIVIL, INDUSTRIAL AND DOMESTIC SYSTEMS**

(30) Priority: 21.08.2023 IT 202300017391
(71) Applicant: Adega S.r.l., 36051 Creazzo (IT)
(72) Inventor: CANEVA, Luigino, 36051 Creazzo (IT); CANEVA, Gianmarco, 36050 Monteviale (IT)
(74) Representative: Contadin, Giorgio

(57) **Abstract**

A hydraulic component (1) for civil, industrial and domestic systems comprising a rigid outer container (2) adapted to be coupled to a connecting pipe of a hydraulic circuit, and an elastically yielding inner diaphragm (3), arranged inside the outer container (2), the inner wall (2a) of which is stably constrained at a peripheral edge (3a) so as to define a first variable-volume chamber (4), adapted to contain water, and a second variable-volume chamber (5), adapted to contain a pressurized gas, those chambers (4, 5) being distinct and hermetically separated from each other. In particular, the inner diaphragm (3) comprises a substantially stretched and flat separation membrane (6), having a composite structure consisting of an axially and longitudinally deformable elastic support fabric (7; 70; 700) made of woven mesh (9; 78; 708) of plastic material, and of at least one surface coating layer (8) made of high elasticity elastomer and coupled above at least one of the side faces (7a, 7b) of said elastic support fabric (7; 70; 700).

## Description

The present invention relates to an innovative and improved expansion vessel of the closed type, notoriously a hydraulic component for civil, industrial and domestic systems which is present, for example, in domestic sanitary water systems, irrigation and water distribution systems, pumping and water lifting systems and in heating systems (domestic and civil), mounted at the pump outlet, i.e., on the pump outlet pipe.

An expansion vessel has the function of containing sudden changes in pressure of the hydraulic circuit, avoiding jumps and water hammers which would otherwise have to be absorbed by the system, with possible damage thereto.

For the construction logic thereof, the expansion vessel is also called, in the technical jargon of those skilled in the art, simply "lung," with reference in particular to the deformable or inflatable membrane acting as an air chamber and which, however, is only the central element of the expansion vessel.

As known, expansion vessels are hydraulic elements designed to absorb the variation in volume of liquid in the system, favoring the correct operation thereof in the various operating steps thereof, avoiding (as already mentioned just above) dangerous pressure surges in the circuit and water hammers, which would otherwise be absorbed by the pipes and by the rest of the system.

The expansion vessels currently available on the market are of two types: open type or closed type.

Open type expansion vessels place the fluid in direct contact with the atmosphere. To properly absorb the circuit pressure, it must be placed at the highest point of the system, above the boiler and all the radiators. In many cases it is also an access point for filling the circuit. The pressure which is created below in the system is equal to that of the water column existing between the open vessel and the boiler.

Closed-type expansion vessels, to which the present invention is directed in particular and specifically, can instead be installed at any point of a hydraulic circuit and consist of a rigid container, generally made of metal, divided into two chambers having variable volume and hermetically separated, one containing the circuit fluid (water, almost incompressible), the other containing air (or a gas, compressible) preloaded at a certain pressure by means of a special valve.

The division between the two chambers can occur by virtue of a bag or an inner elastic membrane: a pressure variation causes the bag to vary in volume or the membrane to change position inside the rigid container, compensating for the pressure variation.

The greater the volume of the bag or the membrane surface (lung), the greater the ability to compensate the pressure changes which occur in the hydraulic system.

Currently, the closed-type expansion vessels comprising an elastic membrane mainly consist of a hollow body (the aforesaid rigid container), defined by two half-shells hermetically coupled to each other, and by an elastic membrane situated inside the hollow body so as to define the two variable-volume chambers which are distinct and hermetically separated from each other.

In the expansion vessels for drinking water systems, in particular, the half-shell used to contain the water is typically made of a material suitable for contact with food liquids or the inner shell is coated with a plastic coating.

The elastic membrane is peripherally constrained to the inner wall of the hollow body and hermetically separates a first chamber, containing water, from a second chamber, containing a pressurized gas, such as air or nitrogen, and is provided with a valve to determine the pre-loaded pressure.

To constrain the elastic membrane to the inner wall of the hollow body, the peripheral edge thereof is typically turned up and retained between the inner wall of the half-shell and an inner ring or, after the insertion of the elastic membrane and the inner ring, the half-shell is deformed to make an annular groove on the outer circumference and a corresponding inner rib which, reducing the section of the hollow body, presses the peripheral edge of the elastic membrane on the inner ring, thus preventing the slipping off thereof.

In addition to being elastically yielding, the separation membrane of the two inner chambers of the hollow body is typically made of synthetic rubber and shaped according to a shape similar to that of the half-shells; normally, such an elastic membrane, now intended for the uses listed above, is made by means of molding and vulcanization.

It is also known that the elastic membrane, if correctly designed and produced, is not subjected to high pressure values since in the normal use condition the pressures present in the two inner chambers are equal; even when the use conditions of the expansion vessel are not those foreseen and the inner elastic membrane is not in a balanced pressure environment, the membrane is forced to move inside the hollow body varying in volume, so as to compensate for the pressure imbalance, while, in the limit case (i.e., when the pressure reaches values which exceed those of the set operating range), the elastic membrane is forced to rest on an inner wall of the half-shells of the expansion vessel which prevents an excessive deformation thereof.

However, precisely because of the manufacturing process thereof, the shaping and the material which distinguishes it, the elastic membranes installed in the known expansion vessels hardly have a standard, uniform shape, equal to itself, such as to allow the automation of the application thereof to the half-shells of the outer container (or hollow body), so that the operation inevitably requires the manual input of an operator who couples it to a half-shell before closing this with the other half-shell, to form the hollow body.

In fact, the elastic vulcanized rubber membranes mounted in the current state of the art in expansion vessels are often different from each other by shaping.

This has a negative impact also in logistical terms - efficiency of storage and transport of elastic membranes intended for expansion vessels - and on the related costs.

Such precise drawbacks also apply to the elastic membranes shown in the pressure accumulator referred to in the prior art document published as US2106/0245310 A1 and in the closed expansion vessel referred to in the prior art document published as KR20120042512 A, respectively.

Moreover, in such prior art documents the multilayer membrane (numbered 4 and 40, respectively) clearly has an undulating, shaped or, in any case, articulated and irregular structure, necessary to allow a greater deformation capacity thereof, otherwise not so effective due to the materials with which it is made or composed. Therefore, the present invention intends to obviate the drawbacks of the prior art just highlighted.

In particular, primary purpose of the invention is to provide an expansion vessel of the closed type in which the elastic membrane (or diaphragm), contrary to what occurs in the prior art, has a defined standard shape which remains stable in the various production examples.

In the cognitive sphere of such a purpose, it is task of the invention to indicate an expansion vessel of the closed type which id producible and assembleable in an easier manner with respect to the prior art, even totally automated, or which at least the set-up thereof has a higher level of automation than that found in the known expansion vessels.

It is another task of the present invention to provide an expansion vessel of the closed type the elastic membrane of which, generally produced by third-party companies and only coupled to the metal outer container by the company supplying the expansion vessels to the market, is storable and transportable with greater effectiveness with respect to what occurs in the prior art.

It is an additional task of the current invention to create an expansion vessel of the closed type which generally has an easier management of item codes with respect to that of the known expansion vessels.

It is a last but not least purpose of the invention to devise an expansion vessel of the closed type which has lower production costs with respect to those associated with equivalent expansion vessels of the prior art, the cost of the raw materials and labor employed being the same.

Said purposes are achieved by means of an expansion vessel of the closed type according to the appended claim 1, to which reference is made for the sake of brevity.

Further detailed technical features of the expansion vessel of the closed type of the invention are contained in the respective dependent claims.

The aforesaid claims, hereinafter specifically and practically defined, form an integral part of the present description.

Advantageously, the closed-type expansion vessel of the present invention overall has lower management costs with respect to those of similar expansion vessels currently on the market.

This is by virtue of the fact that the inner diaphragm dividing the two chambers, containing the respective fluid, comprises a substantially stretched and flat separation membrane, having a composite structure consisting of:
- an axially and longitudinally deformable elastic support fabric made of woven mesh of plastic material;
- a surface coating layer made of high elasticity elastomer and coupled above to at least one (preferably both) of the side faces of the elastic support fabric.

Unlike the prior art in which the elastic or elastically deformable membranes are made of non-reinforced vulcanized rubber and appropriately shaped to adapt to the half-shells in which they must be inserted, the expansion vessel of the present invention allows the following advantages to be obtained:
- easy adaptability of the elastic separation membrane to the half-shells of the expansion vessel, as it is sufficient to cut to size, for example by means of a die, a desired portion of composite separation membrane;
- easy storage of the elastic separation membranes, which can be placed in a warehouse in flat sheets of appropriate size or in rolls to be cut into the required size;
- reduction of the items to be stored in stock by the subcontractor supplier of this component for expansion vessels, since, if the elastic separation membrane can be obtained from a roll of fabric, it can be adapted to the required size simply by cutting a desired portion of the roll itself;
- considerable reduction in the cost of elastic separation membranes due to the reduction in the thickness of the material with which they are made with respect to the equivalent membranes used in the prior art for the same purposes, and in that it can be produced with a continuous process;
- easy automation of the cutting and coupling of the elastic separation membrane with the half-shells;
- possibility of fully automating the production process of the expansion vessels. Said purposes and advantages, as well as others which will emerge hereinafter, will appear to a greater extent from the following description, related to preferred embodiments of the expansion vessel of the closed type of the invention, given by way of indicative and non-limiting example, with reference to the accompanying drawing tables in which:
   - figure 1 is a simplified longitudinal sectional view of the closed-type expansion vessel of the invention;
   - figure 2 is a truncated side view of a construction assembly - the separation membrane - of the expansion vessel of figure 1;
   - figure 3 is an axonometric view of a detail of figure 2;
   - figure 4 is a partial side view of figure 3;
   - figure 5 is a cutaway plan view of figure 3;
   - figure 6 is a cutaway plan view of a first embodiment variant of the detail of figure 3.

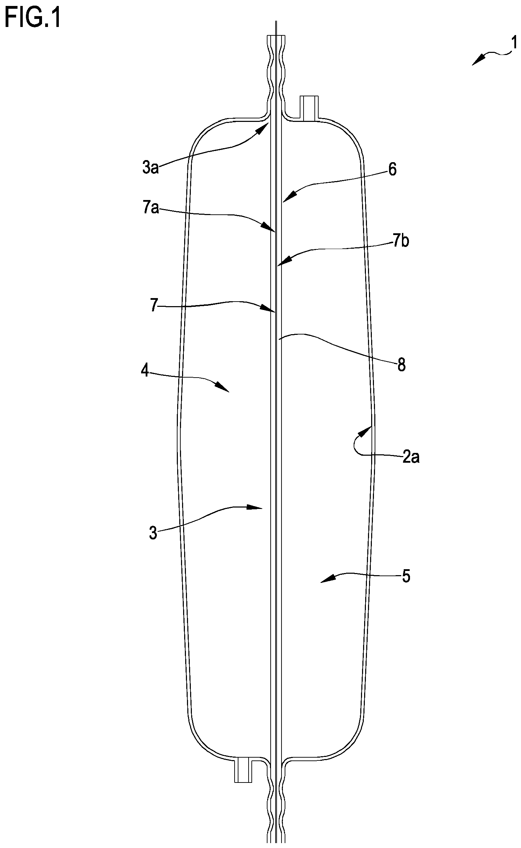

The close- type expansion vessel of the invention is exemplarily illustrated in figure 1, where it is globally numbered with 1.

As it can be seen, the expansion vessel 1 comprises, as it is customary in the prior art:
- a rigid outer container (or hollow body) 2 preferably made of metal material and adapted to be coupled to a connecting pipe (not shown) of a hydraulic circuit;
- an elastically yielding inner diaphragm 3, arranged inside the outer container 2, the inner wall 2a of which is stably constrained at a peripheral edge 3a so as to define a first variable-volume chamber 4, intended to contain water, and a second variable-volume chamber 5, intended to contain a pressurized gas (such as air or nitrogen): such chambers 4, 5 are distinct and hermetically separated from each other.

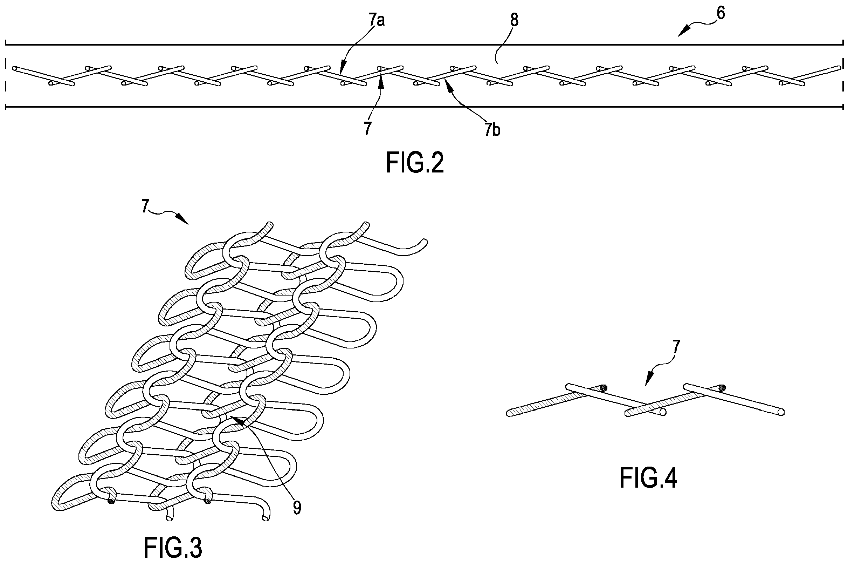

In accordance with the innovative features of the invention, on the other hand, the inner diaphragm 3 comprises a laminar and elastic separation membrane 6 which is substantially stretched and flat, having a composite structure, more specifically visible in figure 2, consisting of:
- an axially and longitudinally deformable elastic support fabric 7 made of woven mesh 9 of plastic material;
- a surface coating layer 8 made of high elasticity elastomer and coupled above to both side faces 7a, 7b of the elastic support fabric 7.

The innovative flat structure which distinguishes the laminar and elastic separation membrane 6 of the closed-type expansion vessel 1 of the invention can be obtained and assembled more easily with respect to the elastic membranes envisaged by the known expansion vessels, while maintaining a high level of deformability also by virtue of the composition thereof given by the particular type described above of the aforesaid elastic support fabric 7 and the aforesaid surface coating layer 8.

In particular, as best highlighted in figure 3, the woven mesh 9 of the elastic support fabric 7 has a three-dimensional structure comprising rounded-mesh rings with a wide radius and an undulating trend, so as to allow an elongation thereof or a deformation thereof in the direction of an applied strain.

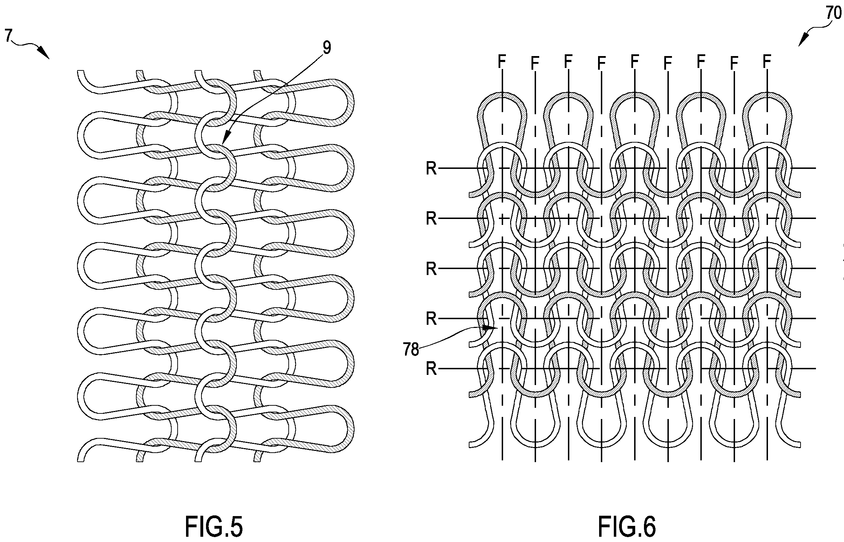

Figures 4 and 5 also help to highlight that, preferably but not necessarily, the woven mesh 9 advantageously comprises a high tenacity monofilament to confer high mechanical resistance to the elastic and reinforced separation membrane 6.

Advantageously, each monofilament has a diameter value in the range 0.1÷1.2 mm, preferably in the range 0.2÷0.5 mm, as surprisingly and unexpectedly detected by the applicant of the present invention during numerous experiments carried out in the laboratory.

In the weave of the woven mesh 9 with a three-dimensional structure, the applicant of the present invention has also noted with his research and development activities how it is appropriate and advantageous, although not limiting, that the lines of the monofilament arranged along horizontal directions R (commonly defined as "wales", in textile jargon) and the lines of the monofilament arranged along vertical directions F (commonly defined as "courses", in textile jargon) are spaced from each other by a value in the range 4÷30 times the diameter of the monofilament itself.

The combination of the technical features determined, on the one hand, by the undulating trend of the mesh rings of the woven mesh 9 of the elastic fabric 7, and on the other hand, by the high tenacity monofilament of such woven mesh 9 ensures greater deformability to the elastic fabric 7 itself, unlike what occurs in the membranes shown in the prior art documents US2106/0245310 A1 and KR20120042512 A which are rather silent on the point, at most referring to multi-filament mesh.

It is understood that in further embodiments of the invention, not shown, the woven mesh can comprise more than a single monofilament, or a multi-filament.

By way of preference but not limitation, the elastic support fabric 7 is made of any of the thermoplastic yarns selected from the group consisting of polyester (PES or PL), polyurethane (PU), aliphatic polyamide (PA, also known as nylon), polyethylene (PE), polypropylene (PP), aramid fiber (such as kevlar), semi-artificial textile fiber obtained from wood or cotton cellulose (also called in jargon "artificial silk" and also known as "rayon"), and/or appropriate combinations thereof.

The monofilament with which the elastic reinforcement fabric 7 is made does not tend to stick to the plastic material in which it remains trapped and this, therefore, allows the sliding of the various monofilaments forming the elastic fabric 7 itself so as to increase the deformation thereof when the composite structure is subjected to strain.

According to the preferred embodiment of the invention described herein, the elastic support fabric 7 is totally embedded, incorporated or trapped in the surface coating layer 8 due to a hot coupling carried out on the separation membrane 6.

It is understood that other constructive variants of the expansion vessel of the invention, not shown in the following drawings, may envisage that the elastic support or reinforcement fabric is only partially embedded, incorporated or trapped in the surface coating layer: this, especially in those embodiments of the invention in which only one side face of the elastic support fabric is involved in the coupling with the surface coating layer.

As far as the surface coating layer 8 is concerned, it is monolithic, continuous and evenly distributed to cover in this case both side faces 7a, 7b of the elastic support fabric 7.

More in detail, the elastomer with which the surface coating layer 8 is made is compatible with the coupling with said plastic material with which said elastic support fabric is made, so as to facilitate a possible recycling of the separation membrane 6 without the need to separate the various layers forming it.

Preferably but not bindingly, the elastomer of the surface coating layer 8 is any of the thermoplastic elastomer materials selected from the group consisting of thermoplastic elastomer-urethane (TPE-U), thermoplastic elastomer-olefin (TPE-O), thermoplastic elastomer-styrene (TPE-S), thermoplastic elastomer-elastomer (TPE-E) and derived formulations thereof and/or appropriate combinations thereof, or any of the elastomeric materials other than thermoplastics selected from the group consisting of natural rubber, chloroprene, silicone rubber, SBR rubber, synthetic rubber (such as SBR rubber or EPDM rubber), and/or appropriate combinations thereof.

Essentially, the elastomer of the surface coating layer 8 is a material having in any case good, although not absolute, elastic properties, to appropriately support the movement of the elastic support or reinforcement fabric 7, a useful aspect for example when assembling the expansion vessel 1.

Furthermore, such an elastomer of the surface coating layer 8 has high elasticity and temperature resistance.

Advantageously but not limitedly, the separation membrane 6 of the expansion vessel 1 comprises an auxiliary protection layer, not depicted in the attached figures for the sake of descriptive simplicity, integral with the surface coating layer 8 of the separation membrane 6 and adapted to prevent the passage or migration of gas (air or nitrogen, as already observed) from the second chamber 5 to the first chamber 4 and/or water from the first chamber 4 to the second chamber 5.

Such an auxiliary protection layer can be coupled above and outside the surface coating layer 8 or be incorporated in the latter.

In particular, the auxiliary protection layer is a barrier film made of any of the waterproofing materials selected from the group consisting of ethylene-vinyl alcohol (EVOH), polyvinylidene chloride (PVDC), polyvinyl alcohol (PVA), polypropylene (PP), polyethylene terephthalate (PET), and/or appropriate combinations thereof.

As already highlighted above, the separation membrane 6 is presented in the form of (or is available as or again consists of) a substantially flat laminar element, already cut to size or simply to be trimmed to adapt it to the required measurements, or a laminar roll of defined and constant dimensions, from which a plurality of flat elastic separation membranes 6 can be obtained with the dimensions required when assembling the expansion vessel 1 of the invention.

Figure 6 shows a first possible, non-limiting, embodiment variant (numbered 70) of the elastic support, base or reinforcement fabric of the expansion vessel of the invention, which differs from the solution with elastic fabric 7 described above for the type of woven mesh with three-dimensional structure 78, the difference materializing in the precise manufacturing of the mesh (i.e., in the system with which the monofilament yarn is woven).

Based on the description just given, it is therefore understood that the closed-type expansion vessel, object of the present invention, achieves the purposes and obtains the advantages already mentioned.

In particular, it was found that the expansion vessel of the invention allows improving, with respect to the current state of the art, the assembly of the elastic separation membrane to the outer container, which can also be obtained with completely automated procedures that cannot be detected and applied, by virtue of the construction design thereof which allows a standardized and uniform series production thereof.

In summary, the main technical concept underlying the expansion vessel of the invention therefore consists of a composite separation membrane which is flat but sufficiently elastic to adapt to the inner shapes of the half-shells of the expansion vessel.

Furthermore, another important technical concept disclosed by the invention is linked to the fact that, advantageously, the three-dimensional woven mesh - which contributes to the formation of the separation membrane of the expansion vessel, which is the claimed subject - limits and distributes the expansion of the separation membrane itself, preventing an excessive expansion from being created in individual areas: as known, in fact, a concentration of the expansion in a circumscribed space, if a reinforcing structure such as the elastic support (or base or reinforcement) fabric in the invention is missing, it significantly increases the percentage expansion of such a space and causes a yielding of the material which, repeating over time, causes a possible failure of the element concerned.

In the executive phase, modifications may be made to the closed-type expansion vessel of the current invention consisting, for example, of a number of surface coating layers, possibly also distinguished from each other by the type of elastomeric material with which they are made, greater than one for at least one or for each of the side faces of the elastic support (or base or reinforcement) fabric of the separation membrane.

In addition, there may be other embodiments of the closed-type expansion vessel of the invention, not shown below, in which only one of the side faces of the elastic reinforcement or support fabric is affected by the coupling, generally although not exclusively obtained by means of hot technology, with the elastomer (preferably thermoplastic) surface coating layer.

Beyond that, in further embodiments of the expansion vessel exclusively claimed herein, also not depicted in the accompanying drawings, the elastic support or reinforcement fabric may have a different mesh structure from that shown in such drawings, which does not affect the advantage provided by the present invention. Finally, it is apparent that several other variations may be made to the closed-type expansion vessel in question, within the limited scope of the appended claims, just as it is apparent that any materials, shapes and sizes of the details shown may be used as needed in the practical implementation of the invention, and may be replaced by other technically equivalent elements.

Where the constructional features and techniques mentioned in the following claims are followed by reference signs or numerals, such reference signs were introduced for the sole purpose of increasing the intelligibility of the claims themselves, and therefore have no limiting effect on the interpretation of each element identified, by way of example only, by such reference signs.

## Claims

1. Expansion vessel of the closed type (1) comprising:
- a rigid outer container (2) adapted to be coupled to a connecting pipe of a hydraulic circuit;
- an elastically yielding inner diaphragm (3), arranged inside said outer container (2) the inner wall (2a) of which is stably constrained at a peripheral edge (3a) so as to define a first variable-volume chamber (4), adapted to contain water, and a second variable-volume chamber (5), adapted to contain a pressurized gas, said chambers (4, 5) being distinct and hermetically separated from each other,
**characterized in that** said inner diaphragm (3) comprises a substantially stretched and flat separation membrane (6), having a composite structure consisting of:
- an axially and longitudinally deformable elastic support fabric (7; 70) made of woven mesh (9; 78) of plastic material;
- at least one surface coating layer (8) made of high elasticity elastomer and coupled above to at least one of the side faces (7a, 7b) of said elastic support fabric (7; 70).

2. Expansion vessel (1) according to claim 1), **characterized in that** said woven mesh (9) has a three-dimensional structure comprising rounded-mesh rings with a wide radius and an undulating trend so as to allow an elongation thereof in the direction of an applied strain.

3. Expansion vessel (1) according to claim 1) or 2), **characterized in that** said woven mesh (9; 78) comprises at least one high tenacity monofilament to confer high mechanical resistance to said separation membrane.

4. Expansion vessel (1) according to claim 3), **characterized in that** each of said monofilament has a diameter of value in the range 0.1÷1.2 mm, preferably in the range 0.2÷ 0.5 mm.

5. Expansion vessel (1) according to claim 3), **characterized in that** in the weave of said woven mesh (9; 78), the lines of said monofilament arranged along horizontal directions (R) and the lines of said monofilament arranged along vertical directions (F) are mutually spaced by a value in the range 4÷30 times the diameter of said monofilament.

6. Expansion vessel (1) according to any of the preceding claims, **characterized in that** said elastic support fabric (7; 70; 700) is made of any of the thermoplastic yarns selected from the group consisting of polyester (PES or PL), polyurethane (PU), aliphatic polyamide (PA), polyethylene (PE), polypropylene (PP), aramid fiber, semi-artificial textile fiber obtained from wood or cotton cellulose, and/or combinations thereof.

7. Expansion vessel (1) according to any of the preceding claims, **characterized in that** said elastic support fabric (7; 70) is at least party embedded, incorporated or trapped in said surface coating layer (8) due to a hot coupling carried out on said separation membrane (6).

8. Expansion vessel (1) according to any of the preceding claims, **characterized in that** said surface coating layer (8) is monolithic, continuous and uniformly distributed to cover at least one of said side faces (7a, 7b) of said elastic support fabric (7; 70).

9. Expansion vessel (1) according to any of the preceding claims, **characterized in that** said elastomer with which said surface coating layer (8) is made is compatible for coupling with said plastic material with which said elastic support fabric (7; 70) is made.

10. Expansion vessel (1) according to any of the preceding claims, **characterized in that** said elastomer of said surface coating layer (8) is any of the thermoplastic elastomeric materials selected from the group consisting of thermoplastic elastomer-urethane (TPE-U), thermoplastic elastomer-olefin (TPE-O), thermoplastic elastomer-styrene (TPE-S), thermoplastic elastomer-elastomer (TPE-E) and derived formulations thereof, and/or combinations thereof, or any of the elastomeric materials other than the thermoplastics selected from the group consisting of natural rubber, chloroprene, silicone rubber, SBR rubber, synthetic rubber, and/or combinations thereof.

11. Expansion vessel (1) according to any of the preceding claims, **characterized in that** said elastomer has high elasticity and resistance to temperature.

12. Expansion vessel (1) according to any of the preceding claims, **characterized in that** said separation membrane (6) includes an auxiliary protection layer, integral with said surface coating layer (8), adapted to prevent the passage of said gas from said second chamber (5) to said first chamber (4) and/or of said water from said first chamber (4) to said second chamber (5).

13. Expansion vessel (1) according to claim 12), **characterized in that** said auxiliary protection layer is a barrier film made of any of the waterproofing materials selected from the group consisting of ethylene-vinyl alcohol (EVOH), polyvinylidene chloride (PVDC), polyvinyl alcohol (PVA), polypropylene (PP), polyethylene terephthalate (PET), and/or combinations thereof.

14. Expansion vessel (1) according to any of the preceding claims, **characterized in that** said separation membrane (6) consists of a substantially flat laminar element or a laminar roll with defined and constant dimensions.
